# EUROPEAN PATENT APPLICATION

(11) **EP 4 819 565 A1**
(43) Date of publication of application: **07.10.2026**
(21) Application number: 24909791.6
(22) Date of filing: 08.08.2024
(51) Int. Cl.: H04L 41/5061

(54) **MANAGEMENT METHOD AND APPARATUS FOR NETWORK MANAGEMENT INTENT, AND SYSTEM**

(30) Priority: 26.12.2023 CN 202311825090
(71) Applicant: Huawei Technologies Co., Ltd., Shenzhen, Guangdong 518129 (CN)
(72) Inventor: FENG, Xiaohan, Shenzhen, Guangdong 518129 (CN); LI, Yexing, Shenzhen, Guangdong 518129 (CN); XU, Ruiyue, Shenzhen, Guangdong 518129 (CN); YU, Yijun, Shenzhen, Guangdong 518129 (CN)
(74) Representative: Epping - Hermann - Fischer
(86) International application number: PCT/CN2024/110544
(87) International publication number: WO 2025/138837

(57) **Abstract**

A network management intent management method, management apparatus, and system are provided. A consumer entity may indicate a preference for a solution to a producer entity. In this case, when a target of an intent cannot be fulfilled, the producer entity may generate a solution that satisfies the preference, and does not need to generate a solution that does not satisfy the preference. This helps prevent the producer entity from generating a solution that the consumer entity does not consider at all, to reduce a waste of computing power resources and reduce a burden on the consumer entity.

## Description

This application claims priority to Chinese Patent Application No. 202311825090.3, filed with the China National Intellectual Property Administration on December 26, 2023 and entitled "NETWORK MANAGEMENT INTENT MANAGEMENT METHOD, MANAGEMENT APPARATUS, AND SYSTEM", which is incorporated herein by reference in its entirety.

### TECHNICAL FIELD

This application relates to the field of communication technologies, and more specifically, to a network management intent management method, management apparatus, and system.

### BACKGROUND

With development of network resource management, a network management service consumer entity may not directly manage a network resource. The network management service consumer entity may send a message to a network management service producer entity, so that the network management service producer entity executes a network management intent, to fulfill an expected target of a specified performance indicator of a network device in a specific range. Moreover, when a target of the network management intent is not fulfilled, the network management service producer entity may generate a possible solution and recommend the solution to the network management service consumer entity.

Currently, there is a large waste of computing power resources in a process of generating the solution by the network management service producer entity. Therefore, how to reduce the waste of computing power resources becomes an urgent problem to be resolved.

### SUMMARY

Embodiments of this application provide a network management intent management method, management apparatus, and system, to reduce a waste of computing power resources of a producer entity and reduce a burden on a consumer entity.

According to a first aspect, a network management intent management method is provided. The method may be performed by a producer entity. Unless otherwise specified, the "producer entity" may be the producer entity, or may be an apparatus that can support the producer entity in implementing a function of the producer entity.

The method includes: receiving first information from a consumer entity, where the first information indicates a preference of the consumer entity for a solution, and the preference corresponds to a first network management intent; and when a target of the first network management intent cannot be fulfilled, sending second information to the consumer entity, where the second information indicates one or more recommended solutions, and the one or more recommended solutions satisfy the preference.

The first information may also be described as that the first information indicates an intent expression that is not expected by the consumer entity, and the intent expression that is not expected corresponds to a first intent; or the first information indicates an intent expression that is expected by the consumer entity, and the expected intent expression corresponds to the first intent. The one or more recommended solutions may also be described as one or more recommended intent expressions. The intent expression corresponds to the solution, and the intent expression may be a specific expression form of the solution.

Based on the foregoing method, the consumer entity may indicate a preference for a solution to the producer entity. In this case, when a target of the first intent cannot be fulfilled, the producer entity may generate a solution that satisfies the preference, and does not need to generate a solution that does not satisfy the preference. This helps prevent the producer entity from generating a solution that the consumer entity does not consider at all, to reduce a waste of computing power resources and reduce a burden on the consumer entity.

With reference to the first aspect, in some possible implementations, the first information includes a first attribute of the first network management intent. The first attribute is an attribute that the consumer entity does not expect to change, and the first attribute is not changed in the one or more recommended solutions; or the first attribute is a changeable attribute, and an attribute other than the first attribute is not changed in the one or more recommended solutions.

The attribute that the consumer entity does not expect to change may also be described as an attribute that the consumer entity expects or requires not to change, an attribute that the consumer entity expects to ensure, an attribute that the consumer entity expects to retain, or the like. That the first attribute is not changed in the one or more recommended solutions may also be described as that the first attribute is ensured or retained in the one or more recommended solutions.

That the first attribute is a changeable attribute may also be described as that the first attribute is an attribute that the consumer entity allows to change, an attribute that may not be ensured, an attribute that may not be retained, or the like. That the attribute other than the first attribute is not changed in the one or more recommended solutions may also be described as that the first attribute is changed in the one or more recommended solutions, that only the first attribute is changed in the one or more recommended solutions, that the attribute other than the first attribute is ensured in the one or more recommended solutions, that the attribute other than the first attribute is retained in the one or more recommended solutions, or the like.

Based on the foregoing implementations, the consumer entity may indicate an attribute that is not expected to be changed or a changeable attribute in the first intent, to reflect the preference of the consumer entity for the solution. This helps prevent the producer entity from generating a solution that the consumer entity does not consider at all, to reduce a waste of computing power resources and reduce a burden on the consumer entity.

With reference to any one of the first aspect or the implementations of the first aspect, in some other possible implementations, the first attribute includes a target and/or an object of action.

With reference to any one of the first aspect or the implementations of the first aspect, in some other possible implementations, the first attribute further includes a context.

With reference to any one of the first aspect or the implementations of the first aspect, in some other possible implementations, the method further includes: determining that the target of the first network management intent cannot be fulfilled.

With reference to any one of the first aspect or the implementations of the first aspect, in some other possible implementations, determining that the target of the first network management intent cannot be fulfilled includes: after executing an action group for the first network management intent, determining that the target of the first network management intent is not fulfilled, where the action group includes one or more actions used to manage a managed entity of the first network management intent.

Based on the foregoing implementations, the producer entity may determine, after the first intent is executed, that the target of the first intent is not fulfilled. In this way, the technical solution of this application is applicable to generation of a recommended solution for an executed intent.

With reference to any one of the first aspect or the implementations of the first aspect, in some other possible implementations, determining that the target of the first network management intent cannot be fulfilled includes: performing feasibility check on the first network management intent; and when a result of the feasibility check indicates infeasibility, determining that the target of the first network management intent cannot be fulfilled.

Based on the foregoing implementations, the producer entity may determine, based on the result of the feasibility check, that the target of the first intent cannot be fulfilled. In this way, the technical solution of this application is applicable to generation of a recommended solution for an intent that does not pass the feasibility check.

With reference to any one of the first aspect or the implementations of the first aspect, in some other possible implementations, sending the second information to the consumer entity includes: sending an intent report to the consumer entity, where the intent report includes the second information.

With reference to any one of the first aspect or the implementations of the first aspect, in some other possible implementations, the intent report includes at least one of the following reports: an intent satisfaction report, an intent conflict report, or an intent feasibility check report.

With reference to any one of the first aspect or the implementations of the first aspect, in some other possible implementations, the obtaining the second information based on the first information includes: sending third information to a first network element based on the first information, where the third information indicates the preference or a solution type corresponding to the preference, and the first network element includes a network twin producer entity or a knowledge base; and receiving the second information from the first network element.

With reference to any one of the first aspect or the implementations of the first aspect, in some other possible implementations, sending the third information to the first network element includes: sending a first message to the first network element, where the first message is used to request to perform feasibility check on the first network management intent, and the first message includes the third information; and receiving the second information from the first network element includes: receiving a second message from the first network element, where the second message indicates the result of the feasibility check, and the second message includes the second information.

With reference to any one of the first aspect or the implementations of the first aspect, in some other possible implementations, receiving the first information from the consumer entity includes: receiving a third message from the consumer entity, where the third message is used to request to create the first network management intent, where the third message includes the first network management intent, and the first network management intent includes the first information, or the third message includes the first network management intent and the first information.

According to a second aspect, a network management intent management method is provided. The method may be performed by a consumer entity. Unless otherwise specified, the "consumer entity" may be the consumer entity, or may be an apparatus that can support the consumer entity in implementing a function of the consumer entity.

For terms or features that are in the second aspect or implementations of the second aspect and that are the same as those in the first aspect or the implementations of the first aspect, refer to the first aspect or the implementations of the first aspect. For technical effects of the second aspect or the implementations of the second aspect, refer to the technical effects of the first aspect or the implementations of the first aspect. Details are not described again in the second aspect.

The method includes: sending first information to a producer entity, where the first information indicates a preference of the consumer entity for a solution, and the preference corresponds to a first network management intent; receiving second information from the producer entity, where the second information indicates one or more recommended solutions, and the one or more recommended solutions satisfy the preference; and managing the first network management intent based on the second information.

With reference to the second aspect, in some possible implementations, the first information includes a first attribute of the first network management intent. The first attribute is an attribute that the consumer entity does not expect to change, and the first attribute is not changed in the one or more recommended solutions; or the first attribute is a changeable attribute, and an attribute other than the first attribute is not changed in the one or more recommended solutions.

With reference to any one of the second aspect or the implementations of the second aspect, in some other possible implementations, the first attribute includes a target or an object of action.

With reference to any one of the second aspect or the implementations of the second aspect, in some other possible implementations, the first attribute further includes a context.

With reference to any one of the second aspect or the implementations of the second aspect, in some other possible implementations, receiving the second information from the producer entity includes: receiving an intent report from the producer entity, where the intent report includes the second information.

With reference to any one of the second aspect or the implementations of the second aspect, in some other possible implementations, the intent report includes at least one of the following reports: an intent satisfaction report, an intent conflict report, or an intent feasibility check report.

With reference to any one of the second aspect or the implementations of the second aspect, in some other possible implementations, sending the first information to the producer entity includes: sending a third message to the producer entity, where the third message is used to request to create the first network management intent, where the third message includes the first network management intent, and the first network management intent includes the first information, or the third message includes the first network management intent and the first information.

According to a third aspect, a network management intent management method is provided. The method may be performed by a first network element. Unless otherwise specified, the "first network element" may be the first network element, or may be an apparatus that can support the first network element in implementing a function of the first network element. Optionally, the first network element may be a network twin producer entity or a knowledge base.

For terms or features that are in the third aspect or implementations of the third aspect and that are the same as those in the first aspect or the implementations of the first aspect, refer to the first aspect or the implementations of the first aspect. For technical effects of the third aspect or the implementations of the third aspect, refer to the technical effects of the first aspect or the implementations of the first aspect. Details are not described again in the third aspect.

The method includes: receiving third information from a producer entity, where the third information indicates a preference of a consumer entity for a solution or a solution type corresponding to the preference, and the preference or the solution type corresponds to a first network management intent; determining second information based on the third information, where the second information indicates one or more recommended solutions, and the one or more recommended solutions satisfy the preference; and sending the second information to the producer entity.

With reference to the third aspect, in some possible implementations, receiving the third information from the producer entity includes: receiving a first message from the producer entity, where the first message is used to request to perform feasibility check on the first network management intent, and the first message includes the third information; and sending the second information to the producer entity includes: sending a second message to the producer entity, where the second message indicates a result of the feasibility check, and the second message includes the second information.

According to a fourth aspect, a network management intent management method is provided. The method may be performed by a producer entity and a consumer entity. Unless otherwise specified, the "producer entity" or the "consumer entity" may be the producer entity or the consumer entity, or may be an apparatus that can support the producer entity or the consumer entity in implementing a function of the producer entity or the consumer entity.

The method includes: sending, by the consumer entity, first information, and receiving, by the producer entity, the first information, where the first information indicates a preference of the consumer entity for a solution, and the preference corresponds to a first network management intent; when a target of the first network management intent cannot be fulfilled, sending, by the producer entity, second information, and receiving, by the consumer entity, the second information, where the second information indicates one or more recommended solutions, and the one or more recommended solutions satisfy the preference; and managing, by the consumer entity, the first network management intent based on the second information.

For steps performed by the producer entity in the fourth aspect or the implementations of the fourth aspect, refer to the first aspect or the implementations of the first aspect. For steps performed by the consumer entity in the fourth aspect or the implementations of the fourth aspect, refer to the second aspect or the implementations of the second aspect. For terms or features that are in the fourth aspect or implementations of the fourth aspect and that are the same as those in the first aspect or the implementations of the first aspect, refer to the first aspect or the implementations of the first aspect. For technical effects of the fourth aspect or the implementations of the fourth aspect, refer to the technical effects of the first aspect or the implementations of the first aspect. Details are not described again in the fourth aspect.

According to a fifth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a transceiver unit. The processing unit is configured to perform processing steps in the method provided in any one of the foregoing aspects or the implementations of the foregoing aspects. The transceiver unit is configured to perform receiving and sending steps in the method provided in any one of the foregoing aspects or the implementations of the foregoing aspects.

In an implementation, the apparatus is a producer entity, a consumer entity, or a first network element. When the apparatus is the producer entity, the consumer entity, or the first network element, the transceiver unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in a producer entity, a consumer entity, or a first network element. When the apparatus is the chip, the chip system, or the circuit used in the producer entity, the consumer entity, or the first network element, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a producer entity, a consumer entity, or a first network element.

In another implementation, the apparatus is a chip, a chip system, or a circuit used in a producer entity, a consumer entity, or a first network element.

According to a seventh aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to an eighth aspect, a processor is provided. The processor is configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to a ninth aspect, a computer-readable storage medium is provided. The computer-readable medium stores program code to be executed by a device, and the program code is used to perform the method provided in any one of the foregoing aspects or the implementations of the foregoing aspects.

According to a tenth aspect, a computer program product including instructions is provided. When the computer program product runs on a computer, the computer is caused to perform the method provided in any one of the foregoing aspects or the implementations of the foregoing aspects.

According to an eleventh aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method of this application is not limited in this application. For example, the method may be performed by one chip, or may be performed by two or more chips. In addition, when there are two or more chips that implement the method of this application, a chip vendor is not limited. The chips may be from a same vendor or from different vendors.

According to a twelfth aspect, a communication system is provided. The communication system includes at least one of the foregoing producer entity, consumer entity, or first network element.

According to a thirteenth aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of a structure of an intent information object class (information object class, IOC);
FIG. 2 is a diagram of a structure of an intent report IOC;
FIG. 3 is a diagram of a structure of a communication system to which an embodiment of this application is applicable;
FIG. 4 is a schematic flowchart of a network management intent management method 300 according to an embodiment of this application;
FIG. 5 is a schematic flowchart of a network management intent management method 400 according to an embodiment of this application;
FIG. 6 is a schematic flowchart of a network management intent management method 500 according to an embodiment of this application;
FIG. 7 is a diagram of a structure of an apparatus according to an embodiment of this application;
FIG. 8 is a diagram of another structure of an apparatus according to an embodiment of this application; and
FIG. 9 is a diagram of a chip system according to an embodiment of this application.

### DESCRIPTION OF EMBODIMENTS

Before embodiments of this application are described, the following descriptions are first provided.

"Indicating" may include direct indicating and indirect indicating, or "indicating" may be explicitly and/or implicitly indicating. Various numerical numbers such as first and second are merely used for differentiation for ease of description, and are not used to limit the scope of embodiments of this application, for example, to distinguish between different messages and different information. "Predefinition" may be implemented by pre-storing corresponding code or a corresponding table in a device, or may be implemented in another manner of indicating related information. A specific implementation of the "predefinition" is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "exemplary", "for example", "example", and "in an (another) example" are used to represent giving an example, an illustration, or a description. Any embodiment or design scheme described as an "example" in this application should not be explained as being more preferred or having more advantages than another embodiment or design scheme. The terms "comprise", "include", "have", and variants thereof all mean "include but are not limited to", unless otherwise specifically emphasized in another manner. ''A plurality of'' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Related descriptions about sending a message, information, or data by a network element A to a network element B, and receiving, by the network element B, the message, information, or data from the network element A are intended to describe a network element to which the message, information, or data is to be sent. Whether the message, information, or data is directly sent or indirectly sent via another network element is not limited. Descriptions such as "when...", "in a case of...", and "if" all mean that a device performs corresponding processing in an objective case, and are not limited to time, and the device is not required to perform a determining action during implementation. This does not mean that there is another limitation.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The technical solutions of this application may be applied to various network function virtualization (network function virtualization, NFV) systems. In the systems, current service technical solutions, network construction schemes, and network operations and maintenance methods of an operator may be described as modes and policies in a standard formal language, and the technical solutions and the construction schemes are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, or an open network automation platform (open network automation platform, ONAP) system.

For ease of understanding of embodiments of this application, some terms in embodiments of this application are first explained.

### 1. Network management and network management service

### 1.1 Network management

The network management is to manage a network resource, including but not limited to monitoring, controlling, and recording performance and usage of the network resource, and delivering a management action group to the network resource (for example, a device in a network) based on a detected network status, to enable the network to run effectively. For example, the network management may be at least one of monitoring, testing, configuring, analyzing, evaluating, or controlling the network resource. The network management may alternatively be that when a fault occurs in the network, the fault can be reported and processed in time, a network system can be coordinated and maintained to run efficiently, and so on. The network resource is an object of action on which network management is to be performed, and may also be referred to as a network object or a managed entity. For example, the network resource may be a base station device, a router, a switch, or a core network device. This is not particularly limited in embodiments of this application. For ease of description, the managed entity is used as an example for description in embodiments of this application, but may be replaced with another object of action on which network management is to be performed.

### 1.2 Network management service

The network management service is a service that provides a network management function. A producer entity of the service usually provides the network management function for a consumer entity of the service through a network interface (for example, a service based interface, service based interface).

### 2. Network management intent (intent for short)

The network management intent is a requirement of a network management service consumer entity for a network management service, and may also be referred to as a network management service requirement. The name is not limited in embodiments of this application. For example, the network management intent may be an intent like an optical dedicated line service intent or an energy saving intent, for example, an intent (intent) defined in the 3rd generation partnership project (3rd generation partnership project, 3GPP) standard specification 28.312.

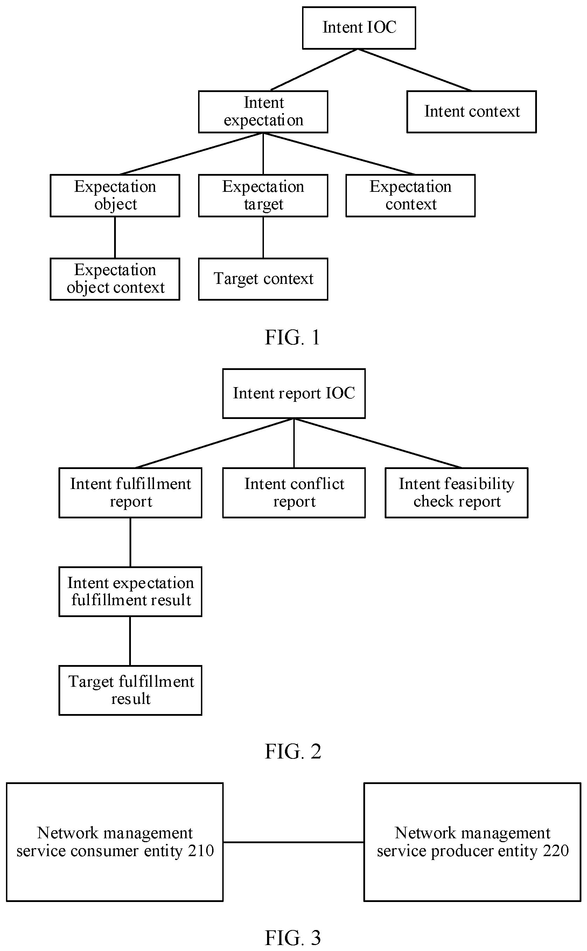

In an intent-based interaction scenario, two roles are mainly included: a network management service producer entity and a network management service consumer entity. The network management service producer entity may also be referred to as a network management service provider entity, a network management provider, an intent provider (intent provider), an intent handler (intent handler), or the like. The network management service consumer entity may also be referred to as a network management service consumer, an intent consumer (intent consumer), an intent owner (intent owner), or the like. The network management service consumer entity may be a network management service invoker, may perform operations such as creating, modifying, deleting, and querying for a network management intent expression, the network management service consumer entity may be configured in a network management system (network management system, NMS), an element management system (element management system, EMS), or a network device (network equipment, NE), and the network management service consumer entity may be a management function, a management function entity, a management entity, a network device, a network element, or the like. This is not limited in this application. For more detailed descriptions of the network management service producer entity and the network management service consumer entity, refer to FIG. 3 below.

The intent may be applied to a network system, to fulfill an expected target of a specified performance indicator of a network device in a specific range. The intent may express an expectation for the network system by using a formal specification and description information. The formal specification may be intent-specific syntax or semantics, and the description information may be for describing at least one of a requirement, a target, or a constraint of the intent.

The intent may include at least one intent expectation. Each intent expectation may represent a performance requirement of the network management service consumer entity for a specific network object. One intent expectation may include at least one expectation target and at least one expectation object. Each expectation target may represent a performance requirement of the network management service consumer entity for a specific attribute of the expectation object. The expectation object may be a network object on which an intent acts, and the expectation object may also be referred to as an object of action. For example, the intent expectation may include two expectation targets. One expectation target is that an average downlink throughput rate is greater than 5 Mbps, and the other expectation target is that an end-to-end delay is less than 10 milliseconds. If the average downlink throughput rate of the expectation object is greater than 5 Mbps, the expectation target for the downlink throughput rate is satisfied. If the end-to-end delay of the expectation object is less than 10 milliseconds, the expectation target for the delay is satisfied. If the two expectation targets of the intent expectation are satisfied, the intent expectation is satisfied. If one or more intent expectations are not satisfied or one or more expectation targets are not satisfied, the intent is not satisfied.

In embodiments of this application, that the intent, the intent expectation, or the expectation target is satisfied or not satisfied may also be described as follows: For example, the intent, the intent expectation, or the expectation target is fulfilled or not fulfilled; the intent, the intent expectation, or the expectation target is achieved or not achieved; or the intent, the intent expectation, or the expectation target is fulfilled or not fulfilled.

The intent may further include an intent context. The intent context may represent a constraint or a condition of the network management service consumer entity for the intent. For example, the network management service consumer entity may restrict action duration of the intent by using the intent context.

The intent may further include an expectation context. The expectation context may represent a constraint or a condition of the network management service consumer entity for an intent expectation. For example, the network management service consumer entity may restrict action duration of the intent expectation by using the expectation context.

The intent may further include a target context. The target context may represent a constraint or a condition of the network management service consumer entity for an expectation target. For example, the network management service consumer entity may restrict action duration of the expectation target by using the target context.

The intent may further include an object context. The object context may represent a constraint or a condition of the network management service consumer entity for a network object on which the intent acts. For example, the network management service consumer entity may indicate, by using the object context, an area of the network object on which the intent acts.

For example, the intent may be expressed as follows:

```
         "ensure that for
           Expectation Object O,
           Expectation Target_1 is T_1, Target Context_1 is C_1
           ...,
           Expectation Target_m is T_m, Target Context_k is C_k".
```

For example, the intent may be expressed as follows: Ensure that a handover failure rate of a cell is less than 2% when load of the cell is greater than 80%. "A cell" is an expectation object or an object of action, and "a cell" may correspond to Expectation Object O; "load greater than 80%" is a target context, and "load greater than 80%" may correspond to Target Context (for example, C_1); and "handover failure rate less than 2%" is an expectation target, and "handover failure rate less than 2%" may correspond to Expectation Target (for example, T_1).

The intent expectation, the expectation target, and the intent context described above may be used as information elements in an IOC in an intent creation request. The network management service consumer entity may express a requirement for a network management service by sending the foregoing information elements to the network management service producer entity.

An information element in an intent IOC may express a requirement for a network management service by using a specific structure.

For example, FIG. 1 is a diagram of a structure of an intent IOC.

Refer to FIG. 1. The intent IOC includes an intent expectation and an intent context. The intent expectation includes an expectation object, an expectation target, and an expectation context. The expectation object includes an expectation object context, and the expectation target includes a target context. It may be understood that a non-context-type information element (for example, an intent IOC, an intent expectation, an expectation object, or an expectation target) may include a context-type information element (for example, an intent context, an expectation object context, a target context, or an expectation context), and the context-type information element can be used to restrict the non-context-type information element.

It may be understood that FIG. 1 schematically describes a relationship between attributes in the intent IOC. Based on a network management service requirement, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may include one or more parallel expectation target attributes.

### 3. Network management intent template

The network management intent template is templated description information of a network management intent, and may also be referred to as a network management service requirement template. The name is not limited in embodiments of this application. The intent template may be used to specify syntax and semantics of various attribute expressions described above. For example, the intent template may specify a field type or a value type that may be used for each attribute in an IOC. In an example, the intent template may include intent expectation description information that is used to specify how an intent expectation is expressed. The intent expectation description information may specify a type of an expectation target attribute that may be included in the intent expectation, for example, a delay, a bandwidth, or a maximum quantity of users. The intent expectation description information may further specify a field type of each expectation target. For example, a field type of an expectation target for the delay is a character string, a field type of an expectation target for the bandwidth is a character string, and a field type of an expectation target for the maximum quantity of users is an integer. In another example, the intent template may further include intent context description information that specifies how an intent context and an expectation context are expressed. The intent context description information may be used to specify a field type and the like of the intent context. This is not particularly limited in this application.

### 4. Intent expression

In embodiments of this application, the intent expression is an informational expression for expressing a network management service intent, and may be an instantiation result of a network management intent template. A consumer of a network management intent may instantiate an intent IOC based on the intent template to generate the intent expression. The intent expression generated through the instantiation can be used for a specific network service. For example, the intent expression may be represented by a set of attribute-value key-value pair (for example, a set of [attribute, value]) list of the network management service intent.

For example, the intent expression includes a performance indicator information instance, a network object information instance, and a context information instance.

For example, the performance indicator information instance may include a value or a value range of a target indicator requirement corresponding to performance indicator information. For example, a target indicator requirement corresponding to a performance indicator information template includes a bandwidth parameter, and a performance indicator information instance includes that a value of the bandwidth parameter is 20 M, or a value range of the bandwidth parameter is 10 M to 15 M. For example, the target indicator requirement corresponding to the performance indicator information template includes a delay parameter, and a delay parameter instance includes that a value of the delay parameter is 2s, or a value range of the delay parameter is 1s to 5s.

A target network object indicated by the network object information instance is an instantiation result of a target network object indicated by a network object information template. For example, the target network object indicated by the network object information instance is one of target network objects indicated by the network object information template, to be specific, one of a physical entity or a logical entity that indicates to implement a network management service. In this case, the network object information instance indicates a specific network object. For example, the network object information template indicates a network service, and the network object information instance indicates an energy saving service.

The context information instance indicates a constraint condition of a network management intent expression. For example, the context information instance includes a constraint parameter of the network management intent expression. For example, the context information instance may include information about a source and a sink that correspond to the target network object indicated by the network object information instance.

An intent expectation information instance includes the performance indicator information instance and the network object information instance.

In embodiments of this application, an "intent" transmitted by using a message is an intent expression.

### 5. Network management intent instance

The network management intent instance is a network management intent processing process locally created by a network management service provider entity based on a received network management intent expression (for example, a performance indicator information instance, a network object information instance, or a context information instance).

The network management intent processing process is used to process the network management intent expression. For example, the network management intent processing process may include an identifier, and the identifier is used to identify the process. The network management intent processing process may include a computing resource, and the computing resource is used to perform operations such as network management intent translation and database (for example, semantic knowledge base) querying. The network management intent processing process may include a storage resource, and the storage resource is used to store the network management intent expression, a network management intent translation result, and the like.

Network management intent translation is performed to convert the network management intent expression into a corresponding management action group. The management action group may be instructions applied to a physical entity or a logical entity, for example, adjusting an antenna tilt angle of a base station or turning on an energy saving switch of a cell.

### 6. Network management action group (actions)

The network management action group is one or more network management actions generated by a network management service producer entity based on an intent expression, and the network management service producer entity performs the one or more network management actions to fulfill an intent of a network management service consumer entity. The network management action group may also be referred to as a management operation or an intent operation. The network management action group may be an operation instruction set for an expectation object (for example, a physical entity or a logical entity on which the intent acts and that is in a network system), and includes one or more instructions, for example, adjusting an antenna tilt angle of a base station or turning on an energy saving switch of a cell.

The network management service producer entity may generate a plurality of management action groups based on the intent expression. In an execution process, the network management service producer entity may select a part of the management action groups from the plurality of management action groups for execution at a single time. In other words, the management action group generated by the network management service producer entity based on intent expression translation is an optional operation that can be used to fulfill the intent. The network management service producer entity may select one of the network management action groups for execution to fulfill the intent, or may select a network management action group for execution for a plurality of times to fulfill the intent.

### 7. Intent report

The intent report is used to describe intent report information sent by a network management service producer entity to a network management service consumer entity. Based on the intent report, the network management service producer entity may provide the network management service consumer entity with some information related to an intent, for example, information that needs to be monitored by the network management service consumer entity.

An intent report IOC may include one or more of an intent fulfillment report (IntentFulfilmentReport), an intent conflict report (IntentConflictReport), or an intent feasibility check report (IntentFeasibilityCheckReport).

The intent fulfillment report may also be referred to as an intent satisfaction report, an intent achievement report, intent achievement information, or the like, is used to describe an assessment of an extent to which a particular aspect of the intent of the network management service producer entity is fulfilled. The intent fulfillment report may include fulfillment information of a specific aspect of the intent, the fulfillment information is used to describe a fulfillment status of the specific aspect, and the fulfillment status may be fulfilled or not fulfilled. The specific aspect may include one or more of an intent, an intent expectation, and an expectation target. To be specific, the intent fulfillment report may include one or more of intent fulfillment information (intentFulfilmentinfo), intent expectation fulfillment information (expectationfulfilmentInfo) of the intent, or expectation target fulfillment information (targetfulfilmentInfo) of the intent. For example, the intent fulfillment report includes only the intent fulfillment information. For another example, the intent fulfillment report includes only the expectation target fulfillment information of the intent. For another example, the intent fulfillment report includes the intent fulfillment information, the intent expectation fulfillment information of the intent, and the expectation target fulfillment information of the intent. For example, the intent includes one intent expectation, and the intent expectation may include an expectation target A and an expectation target B. The expectation target A is fulfilled, and the expectation target B is not fulfilled. In the intent fulfillment report, a fulfillment status of the intent is not fulfilled, a fulfillment status of the intent expectation is not fulfilled, a fulfillment status of the expectation target A is fulfilled, and a fulfillment status of the expectation target B is not fulfilled. The intent expectation fulfillment information may also be referred to as an intent expectation fulfillment result (ExpectationFulfilmentResult), and the expectation target fulfillment information may also be referred to as an intent expectation fulfillment result (TargetFulfilmentResult). The intent fulfillment report may further include an achievement value of the expectation target and an optional predicted value of the expectation target. The achievement value of the expectation target is used to describe a current value of the expectation target. The predicted value of the expectation target is used to describe a final achievement value of the expectation target evaluated by the network management service producer entity. Optionally, when the fulfillment status is not fulfilled, the intent fulfillment report may further include a specific unfulfilled state. The specific unfulfilled state may indicate a stage at which the fulfillment status is entered, for example, a stage at which the intent is just created, a stage at which the intent is suspended due to a conflict, or a stage at which an action group corresponding to the intent is executed.

The intent conflict report may also be referred to as intent conflict information, and is used to describe detected intent conflict information. The intent conflict information includes a conflict type and a possible conflict solution. The conflict type includes but is not limited to the following types: a conflict between different intents (that is, an intent conflict, intent conflict), a conflict between different intent expectations of a same intent (that is, an expectation conflict, expectation conflict), or a conflict between different expectation targets of a same intent (that is, a target conflict, target conflict).

The intent feasibility check report may also be referred to as intent feasibility check information, and indicates whether the intent is feasible or not feasible. After receiving an intent creation request or an intent modification request from the network management service consumer entity, the network management service producer entity may automatically perform intent feasibility check, to obtain the intent feasibility check report.

The network management service consumer entity may obtain the intent report from the network management service producer entity through querying or subscription. For example, the network management service consumer entity may query the intent report through a "getMOIAttributeValue" operation, to obtain the intent report. For another example, the network management service consumer entity may subscribe to a "notifyMOIAttributeValueChanges" notification to obtain the intent report.

For example, FIG. 2 is a diagram of a structure of an intent report IOC.

Refer to FIG. 2. The intent report IOC includes an intent fulfillment report, an intent conflict report, and an intent feasibility check report. The intent fulfillment report includes an intent expectation fulfillment result. The intent expectation fulfillment result includes a target fulfillment result. It may be understood that FIG. 2 schematically describes a relationship between attributes in the intent report IOC. Based on a network management service requirement, the intent report IOC may further include another attribute. This is not particularly limited in this application.

### 8. Intent report template

The intent report template is templated description information of an intent report, and is used to specify syntax and semantics of an intent report expression. For example, the intent report template may specify a field type or a value type that may be used for each attribute in an intent report IOC. In an example, the intent report template may include one or more of intent fulfillment description information used to specify how an intent fulfillment report is expressed, intent conflict description information used to specify how an intent conflict report is expressed, and intent feasibility check description information used to specify how an intent feasibility check report is expressed. The intent fulfillment description information may describe a field type, a value type, or the like that may be used for each attribute included in the intent fulfillment report. For example, a type of a fulfillment information attribute includes fulfillment information of an intent, intent expectation fulfillment information, and expectation target fulfillment information, an optional value of the fulfillment information is fulfilled or not fulfilled, and a value type is an integer. For another example, a type of an expectation target attribute includes a throughput rate, and a value type of an achievement value of the throughput rate is an integer. The intent conflict description information indicates how the intent conflict report is represented, for example, an optional attribute and a type of each intent conflict field. For example, the optional attribute of the intent conflict report is a conflict type, and the conflict type includes an intent conflict, an expectation conflict, and a target conflict. The intent feasibility check description information indicates how the intent feasibility check report is represented.

### 9. Intent report expression

The intent report expression is an information expression that expresses a network management service intent report, and may be an instantiation result of an intent report template. The intent report expression includes a requirement of a network management service consumer entity for monitoring an intent and reflects report information of a current intent fulfillment status. A network management service producer entity may instantiate an intent report IOC based on the intent report template, to generate the intent report expression. For example, the intent report expression includes fulfillment information of a current intent and an achievement value of an expectation target. For example, the expectation target of the intent is that a throughput rate is greater than 10 Mbps. Based on the current intent fulfillment status, the network management service producer entity reports the fulfillment information of the intent as: fulfilled, with the achievement value of the expectation target being 12 Mbps.

### 10. Intent report instance

The intent report instance is an intent report processing process created locally by a network management service producer entity based on an intent report expression. The intent report instance may be automatically created when the network management service producer entity creates a network management intent. When the network management service producer entity deletes the network management intent based on a request of a network management service consumer entity, an intent report instance corresponding to the network management intent is also deleted. The intent report instance is not created or deleted by the network management service consumer entity.

The foregoing describes related terms in embodiments of this application. The following describes, with reference to FIG. 3, an application scenario to which embodiments of this application are applicable.

FIG. 3 is a diagram of a structure of a communication system to which an embodiment of this application is applicable. An apparatus that may be used in the communication system is first described.
1. Network management service consumer entity 210: An entity that invokes network management is referred to as a network management service consumer entity. The network management service consumer entity 210 may be configured to invoke a management service, or invoke an intent service to manage a network system. For example, the network management service consumer entity 210 may instantiate an intent template, set an intent IOC, to generate an intent expression, and send the intent expression to a network management service producer network element 220 to achieve an expectation for the network system.

The network management service consumer entity 210 may also be referred to as a network management service consumer network element, a network management service consumer, an intent management service consumer (intent management service consumer), an intent service consumer, an intent consumer (intent consumer), an intent owner (intent owner), or the like. In a future communication system, the network management service consumer entity may also have another name. This is not particularly limited in this application.

A capability or a function of the network management service consumer entity may be deployed on a network element, and the network element is referred to as a network management service consumer network element. Alternatively, the capability or the function of the network management service consumer entity may be deployed on another device. This is not limited in embodiments of this application. For ease of description, the network management service consumer entity is used as an example for description in embodiments of this application, but may be replaced with another device on which the capability or the function of the network management service consumer entity is deployed.

2. Network management service producer entity 220: A network management service provider entity is referred to as a network management service producer entity, and the network management service producer entity 220 may be configured to provide a network management service. For example, the network management service producer entity 220 may receive the intent expression from the network management service consumer entity 210, and perform, based on the intent expression, procedures of intent translation, intent management, and intent execution and maintenance.

The network management service producer entity 220 may also be referred to as a network management service producer network element, an intent management service provider (intent management service provider), an intent service provider, a network management service producer, an intent provider (intent provider), an intent handler (intent handler), or the like. In the future communication system, the network management service producer entity may also have another name. This is not particularly limited in this application.

A capability or a function of the network management service producer entity may be deployed on a network element, and the network element is referred to as a network management service producer network element. Alternatively, the capability or the function of the network management service producer entity may be deployed on another device. This is not limited in embodiments of this application. For ease of description, the network management service producer entity is used as an example for description in embodiments of this application, but may be replaced with another device on which the capability or the function of the network management service producer entity is deployed.

The foregoing entities may be network elements in a hardware device, software functions run on dedicated hardware, or virtualization functions instantiated on a platform (for example, a cloud platform). It may be understood that the foregoing entities may be implemented by one device, or may be implemented by a plurality of devices together. In addition, the foregoing entities may alternatively be functional modules in a system, for example, functional modules in a network management system (network management system, NMS), an equipment management system (equipment management system, EMS), or a device, for example, one or more functional modules in a network device (network equipment, NE). The network device may be a base station or a core network element.

In an example, the network management service consumer entity 210 may be deployed in an NMS, the network management service producer entity 220 may be deployed in different EMSs, and interaction between the network management service consumer entity 210 and the network management service producer entity 220 may be performed through an interface between the NMS and the EMS for information exchange.

In another example, the network management service consumer entity 210 may be deployed in an EMS, the network management service producer entity 220 may be deployed in different NEs, and interaction between the network management service consumer entity 210 and the network management service producer entity 220 may be performed through an interface between the NMS and the EMS for information exchange.

Optionally, the communication system may further include another device or network element, for example, a knowledge base or a network twin service producer entity. The network twin service producer entity may be, for example, a network digital twin (network digital twin, NDT) system or an entity deployed with the NDT system, and may be used to provide a network management service.

The solutions in this application may be further applied to another system including a corresponding entity. This is not specifically limited in embodiments of this application.

For ease of description, a network management intent is referred to as an intent for short, a network management service consumer entity is referred to as a consumer entity for short, a network management service producer entity is referred to as a producer entity for short, and an expectation target is referred to as a target for short.

Currently, when an intent is not fulfilled due to reasons such as a conflict, the producer entity may generate a possible solution based on a current network status, and recommend the solution to the consumer entity. There are three common solutions:
(1) Suspend a whole intent (suspend the whole intent).
(2) Recommend a new intent (recommend a new intent), for example, add a recommended expectation or target, or terminate a part of an intent.
(3) Suggest alternative intent fulfillment (suggest alternative intent fulfilment), for example, update execution time of an intent.

For example, a target of the intent is to ensure that an uplink throughput rate of a conference site is greater than 20 Mbps, and the producer entity monitors the current network status and finds that the target of the intent cannot be fulfilled. Based on the current network status, the producer entity calculates a maximum achievable uplink throughput rate of 15 Mbps and predicts a future network status. It is estimated that the target of the intent can be fulfilled after 5 hours (h). The producer entity may generate the following possible solutions and recommend the possible solutions to the consumer entity: 1. Terminate the intent. 2. Recommend a new intent. A target of the new intent is to ensure that the uplink throughput rate is greater than 15 Mbps. 3. Update execution time of the intent to 5 hours later.

However, the solutions generated by the producer entity may include many useless solutions. The useless solution may be understood as a solution that cannot meet a service requirement of the consumer entity, that is, a solution that cannot meet a specific requirement of the consumer entity in a specific service scenario, that is, a solution that the consumer entity does not consider at all. An intent in a scenario in which an uncrewed aerial vehicle performs inspection on a natural gas pipeline is used as an example. When the intent cannot be fulfilled, a solution for the producer entity to recommend a new object of action is a useless solution. Because the uncrewed aerial vehicle needs to perform inspection along the pipeline, an object of action is unchangeable. Generation of the useless solution consumes computing power resources of the producer entity, causing a waste of computing power resources. In addition, the useless solution also increases difficulty of selection by the consumer entity, and increases a burden on the consumer entity.

For the foregoing problem, this application provides a network management intent management method and apparatus, and a system, to reduce a waste of the computing power resources of the producer entity and reduce the burden on the consumer entity.

The following describes method embodiments of this application.

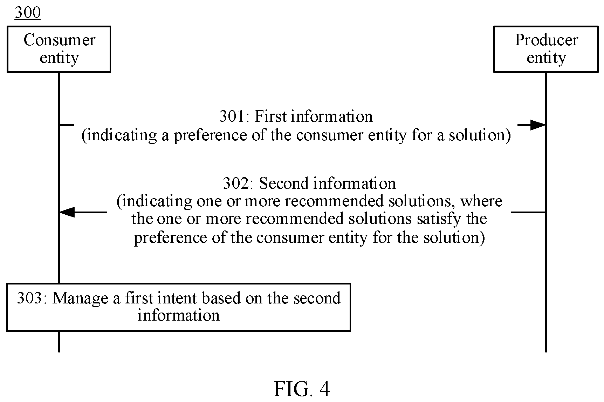

FIG. 4 is a schematic flowchart of a network management intent management method 300 according to this application.

The method shown in FIG. 4 may be performed by a producer entity and a consumer entity. Unless otherwise specified, the "producer entity" or the "consumer entity" may be the producer entity or the consumer entity, or may be an apparatus that can support the producer entity or the consumer entity in implementing a function of the producer entity or the consumer entity. For ease of description, the following uses the producer entity and the consumer entity for description. The method 300 includes at least a part of the following content.

Step 301: The consumer entity sends first information to the producer entity, and correspondingly, the producer entity receives the first information from the consumer entity.

The first information indicates a preference of the consumer entity for a solution, and the preference corresponds to a first intent.

The first intent may be of various types. A type of the first intent may be related to a target included in the first intent. For example, the target of the intent includes that a performance indicator value reaches a corresponding performance indicator range. When a performance indicator is a throughput rate indicator, for example, an average downlink throughput rate is greater than or equal to 5 Mbps, the intent may be referred to as a throughput rate intent. When a performance indicator is an energy saving indicator, for example, saved energy is greater than or equal to 10 kilowatts, the intent may be referred to as an energy saving intent.

That the preference corresponds to the first intent may be understood as that the preference is applicable to the first intent, or the preference is used when the target of the first intent cannot be fulfilled. The solution may be a solution for a case in which the target of the first intent cannot be fulfilled, for example, the foregoing mentioned suspension of the whole first intent, recommendation of a new intent, or suggestion of alternative intent fulfillment. The preference for the solution may be understood as a preference of the consumer entity for the solution for the case in which the target of the first intent cannot be fulfilled. The consumer entity may restrict, based on the preference, the producer entity from generating a solution that does not satisfy the preference.

An implementation of the first information is not limited in embodiments of this application. In a possible implementation, the first information may include a first attribute of the first intent. The first attribute is an attribute that the consumer entity does not expect to change. In this case, the consumer entity prefers a solution in which the first attribute is not changed. In other words, the consumer entity expects the producer entity to recommend, when the first intent cannot be fulfilled, a solution that can satisfy the first attribute or the solution in which the first attribute is not changed. Alternatively, the first attribute is a changeable attribute. If the first intent further includes an attribute other than the first attribute, whether the attribute other than the first attribute is changeable is not limited in embodiments of this application. An example in which only the first attribute of the first intent is changeable is used, and the consumer entity prefers a solution in which the attribute other than the first attribute is not changed or a solution in which only the first attribute is changed. In other words, the consumer entity expects the producer entity to recommend, when the first intent cannot be fulfilled, a solution that can satisfy the attribute other than the first attribute, the solution in which the attribute other than the first attribute is not changed, or the solution in which only the first attribute is changed.

It should be noted that the attribute that the consumer entity does not expect to change may also be described as an attribute that the consumer entity expects or requires not to change, an attribute that the consumer entity expects to ensure, an attribute that the consumer entity expects to retain, or the like. That the first attribute is a changeable attribute may also be described as that the first attribute is an attribute that the consumer entity allows to change, an attribute that may not be ensured, an attribute that may not be retained, or the like.

A specific type of the first attribute is not limited in embodiments of this application. For example, the first attribute may include at least one of a target, an object of action, or a context. The target may also be referred to as an expectation target, and the object of action may also be referred to as an expectation object. The object of action may be used to determine a managed entity of an intent expectation. That the first attribute may include at least one of the target, the object of action, or the context may also be described as that a value of the first attribute may be the target, the object of action, the context, or any combination thereof, or a value of the first attribute corresponds to the target, the object of action, the context, or any combination thereof.

In Example 1, the first attribute is the attribute that the consumer entity does not expect to change. When the first attribute is the target, it indicates that the consumer entity does not accept intent target degradation when the first intent cannot be fulfilled, or that the consumer entity expects the producer entity to recommend, when the first intent cannot be fulfilled, a solution that can satisfy the target, in other words, the consumer entity expects the producer entity to recommend a solution in which the target is not changed. For example, for an intent of material transport by an uncrewed aerial vehicle, a target of the intent is to ensure that an uplink bandwidth of the uncrewed aerial vehicle is greater than 300 kbps, an object of action is a TAC area that a flight path passes through, and the first attribute is the target. After the intent is delivered, the producer entity monitors a network status of the TAC area that the flight path passes through, and finds that the target of the intent cannot be fulfilled. Because a preference of the consumer entity for a solution indicates that the target of the intent is unchangeable (to be specific, the target of ensuring that the uplink bandwidth of the uncrewed aerial vehicle is greater than 300 kbps is unchangeable), the producer entity may recommend another object of action, for example, update the object of action of the intent to another TAC area (for example, a feasible TAC area near an infeasible TAC area). When the first attribute is the object of action, it indicates that the consumer entity expects the producer entity to recommend, when the first intent cannot be fulfilled, a solution that can satisfy the object of action, in other words, the consumer entity expects the producer entity to recommend a solution in which the object of action is not changed. For example, for an intent of inspection on a natural gas pipeline by an uncrewed aerial vehicle, a target of the intent is to ensure that an uplink throughput rate is greater than 25 Mbps, an object of action is a TAC area that a flight path passes through, and the first attribute is the object of action. After the intent is delivered, the producer entity monitors a network status of the TAC area that the flight path passes through, and finds that the target of the intent cannot be fulfilled. Because a preference of the consumer entity for a solution indicates that the object of action is unchangeable, the producer entity does not change the TAC area that is used as the object of action, but changes the target of the intent. For example, it may be recommended that the producer entity updates the target of the intent to ensuring that the uplink throughput rate is greater than 20 Mbps.

In Example 2, the first attribute is a changeable attribute, and the attribute other than the first attribute is an unchangeable attribute. When the first attribute is the target, it indicates that the consumer entity expects the producer entity to recommend, when the first intent cannot be fulfilled, a solution that can satisfy the attribute other than the target, in other words, the consumer entity expects the producer entity to recommend a solution in which the attribute other than the target is not changed. For example, for an intent of inspection on a natural gas pipeline by an uncrewed aerial vehicle, a target of the intent is to ensure that an uplink throughput rate is greater than 25 Mbps, an object of action is a TAC area that a flight path passes through, and the first attribute is the target. After the intent is delivered, the producer entity monitors a network status of the TAC area that the flight path passes through, and finds that the target of the intent cannot be fulfilled. Because a preference of the consumer entity for a solution indicates that the target of the intent is changeable (to be specific, the target of ensuring that the uplink throughput rate is greater than 25 Mbps is changeable, and the TAC area as the object of action is unchangeable), the producer entity may change the target of the intent and does not change an area of action. For example, it is recommended that the producer entity updates the target of the intent to ensuring that the uplink throughput rate is greater than 20 Mbps, and remains the TAC area as the object of action of the intent unchanged. When the first attribute is the object of action, it indicates that the consumer entity expects the producer entity to recommend, when the first intent cannot be fulfilled, a solution that can satisfy an attribute other than the object of action, in other words, the consumer entity expects the producer entity to recommend a solution in which the attribute other than the object of action is not changed. For example, for an intent of material transport by an uncrewed aerial vehicle, a target of the intent is to ensure that an uplink bandwidth of the uncrewed aerial vehicle is greater than 300 kbps, an object of action is a TAC area that a flight path passes through, and the first attribute is the object of action. After the intent is delivered, the producer entity monitors a network status of the TAC area that the flight path passes through, and finds that the target of the intent cannot be fulfilled. Because a preference of the consumer entity for a solution indicates that the object of action of the intent is changeable (to be specific, the TAC area as the object of action is changeable, and the target of ensuring that the uplink bandwidth of the uncrewed aerial vehicle is greater than 300 kbps is unchangeable), the producer entity may change an area of action and does not change the target of the intent. For example, it is recommended that the producer entity updates the object of action of the intent to another TAC (for example, a feasible TAC area near an infeasible TAC area), and remains the target of ensuring that the uplink bandwidth of the uncrewed aerial vehicle is greater than 300 kbps unchanged.

It should be noted that the first attribute may be for a whole intent, or may be for an intent expectation or an expectation target of the intent. This is not limited. For example, the first attribute is the object of action, and the first attribute is the attribute that the consumer entity does not expect to change. When the first attribute is for the whole intent, the first attribute represents objects of action of all intent expectations of the intent, in other words, the consumer entity expects the producer entity to recommend, when the intent cannot be fulfilled, a solution in which the objects of action of all the intent expectations are not changed. When the first attribute is for the intent expectation, the first attribute indicates an object of action of the intent expectation, in other words, the consumer entity expects the producer entity to recommend, when the intent cannot be fulfilled, a solution in which the object of action of the intent expectation is not changed. For example, the first attribute is the target, and the first attribute is the attribute that the consumer entity does not expect to change. When the first attribute is for the whole intent, the first attribute represents all expectation targets of the intent, in other words, the consumer entity expects the producer entity to recommend, when the intent cannot be fulfilled, a solution in which all the expectation targets are not changed. When the first attribute is for the intent expectation, the first attribute represents all expectation targets of the intent expectation, in other words, the consumer entity expects the producer entity to recommend, when the intent cannot be fulfilled, a solution in which all the expectation targets of the intent expectation are not changed. When the first attribute is for the expectation target, the first attribute represents the expectation target, in other words, the consumer entity expects the producer entity to recommend, when the intent cannot be fulfilled, a solution in which the expectation target is not changed.

A manner in which the consumer entity sends the first information to the producer entity is not limited in embodiments of this application.

In a possible implementation, the consumer entity may send the first information as separate information to the producer entity.

In another possible implementation, the consumer entity may send a third message to the producer entity. The third message includes the first information.

A message type of the third message is not limited in embodiments of this application, and the third message may be any message related to intent management.

For example, the third message may be used to create or request to create an intent. For example, the third message is an intent creation request message. When the third message is used to create or request to create an intent, there are a plurality of manners in which the third message carries the first information. This is not limited. In a possible implementation, the third message may include an intent and the first information, and the intent may be represented as an instantiated intent IOC (as shown in FIG. 1). In another possible implementation, the third message may include an intent, the intent includes the first information, and the intent may be represented as an instantiated intent IOC (as shown in FIG. 1). For example, the intent IOC corresponding to the intent includes an intent expectation and an intent context, and the intent context includes the first information. For another example, the intent IOC corresponding to the intent includes an intent expectation, the intent expectation includes an expectation context, and the expectation context includes the first information. For another example, the intent IOC corresponding to the intent includes an intent expectation, the intent expectation includes an expectation target, the expectation target includes a target context, and the target context includes the first information.

For example, the third message may be used to modify or request to modify an intent. For example, the third message is an intent modification request message. When the third message is used to modify or request to modify an intent, there are a plurality of manners in which the third message carries the first information. This is not limited. In a possible implementation, the third message may include an identifier of the intent and the first information. In another possible implementation, the third message may include an identifier of an intent expectation of the intent and the first information. In another possible implementation, the third message may include an identifier of an expectation target of the intent and the first information. In another possible implementation, if the third message implements a modification function by carrying a modified intent IOC, the first information may also be included in the intent IOC of the intent.

It should be noted that the first information may also be described as that the first information indicates an intent expression that is not expected by the consumer entity, and the intent expression that is not expected corresponds to the first intent; or the first information indicates an intent expression that is expected by the consumer entity, and the expected intent expression corresponds to the first intent. The intent expression corresponds to the solution, and the intent expression may be a specific expression form of the solution. In this embodiment of this application, the solution includes a new intent expression used to replace an original intent. The new intent expression may be a complete structured intent expression, or may include only an intent expression that needs to be modified, added, or deleted.

Step 302: When the target of the first intent cannot be fulfilled, the producer entity sends second information to the consumer entity, and correspondingly, the consumer entity receives the second information from the producer entity.

The second information indicates one or more recommended solutions.

A solution in the one or more recommended solutions is a solution for a case in which the target of the first intent cannot be fulfilled, for example, may include the foregoing mentioned suspension of the whole first intent, recommendation of a new intent, or suggestion of alternative intent fulfillment.

The one or more recommended solutions satisfy a preference of the consumer entity for the solution. For example, when the first information includes the first attribute that the consumer entity does not expect to change, the first attribute is not changed in the solution satisfying the preference of the consumer entity for the solution. In this case, the first attribute is not changed in the one or more recommended solutions. With reference to Example 1 in step 301, when the first attribute is the target, for the intent of material transport by the uncrewed aerial vehicle, the one or more recommended solutions are: updating an object of action of the first intent to another TAC area, in other words, the second information indicates to update the object of action of the first intent to another TAC area. When the first attribute is the object of action, for the intent of inspection on the natural gas pipeline by the uncrewed aerial vehicle, the one or more recommended solutions are: updating the target of the first intent to ensuring that the uplink throughput rate is greater than 20 Mbps, in other words, the second information indicates to update the target of the first intent to ensuring that the uplink throughput rate is greater than 20 Mbps. For example, when the first information includes the changeable first attribute, the attribute other than the first attribute is not changed in the solution satisfying the preference of the consumer entity for the solution. In this case, the attribute other than the first attribute is not changed in the one or more recommended solutions. With reference to Example 2 in step 301, when the first attribute is the target, for the intent of inspection on the natural gas pipeline by the uncrewed aerial vehicle, the one or more recommended solutions are: updating the target of the first intent to ensuring that the uplink throughput rate is greater than 20 Mbps, in other words, the second information indicates to update the target of the first intent to ensuring that the uplink throughput rate is greater than 20 Mbps. When the first attribute is the object of action, for the intent of material transport by the uncrewed aerial vehicle, the one or more recommended solutions are: updating an object of action of the first intent to another TAC, in other words, the second information indicates to update the object of action of the first intent to another TAC. For more detailed descriptions, refer to Example 1 and Example 2 in step 301.

It should be noted that, that the first attribute is not changed in the one or more recommended solutions may also be described as that the first attribute is ensured or retained in the one or more recommended solutions. That the attribute other than the first attribute is not changed in the one or more recommended solutions may also be described as that the first attribute is changed in the one or more recommended solutions, that only the first attribute is changed in the one or more recommended solutions, that the attribute other than the first attribute is ensured in the one or more recommended solutions, that the attribute other than the first attribute is retained in the one or more recommended solutions, or the like.

In some embodiments, the producer entity may determine that the target of the first intent cannot be fulfilled. An implementation of determining that the target of the first intent cannot be fulfilled is not limited in embodiments of this application. In a possible implementation, the producer entity performs feasibility check on the first intent, and when a result of the feasibility check indicates infeasibility, determines that the target of the first intent cannot be fulfilled. In another possible implementation, after an action group for the first intent is executed, the producer entity determines that the target of the first intent is not fulfilled. In other words, after the first intent is executed, the producer entity determines, based on an achievement value of the target of the intent, that the target of the first intent is not fulfilled.

An implementation in which the producer entity performs feasibility check on the first intent is not limited in embodiments of this application. In a possible implementation, the producer entity performs feasibility check on the first intent. In another possible implementation, the producer entity requests a first network element to perform feasibility check on the first intent. The first network element may be a knowledge base, a network twin service producer entity, or the like.

In some embodiments, when the target of the first intent cannot be fulfilled, the producer entity may obtain the second information based on the first information. An implementation in which the producer entity obtains the second information based on the first information is not limited in embodiments of this application.

In a possible implementation, the producer entity may determine the second information based on the first information. For example, the producer entity may generate, based on a current network status and the first information, a solution that satisfies the preference of the consumer entity for the solution, and then determine the second information. The network status is a status of a network performance indicator related to the target of the intent. For example, for a throughput rate intent, the current network status may include a throughput rate of a current network. For another example, for an energy saving intent, the current network status may include energy consumption of a current network.

In another possible implementation, the producer entity may obtain the second information from the first network element. The first network element may be a knowledge base, a network twin service producer entity, or the like. For example, the producer entity may send third information to the first network element based on the first information. The third information indicates a preference of the consumer entity for a solution, or the third information indicates a solution type corresponding to the preference. After receiving the third information, the first network element may generate, based on the third information, a solution satisfying the preference of the consumer entity for the solution, and then determine the second information. The first network element sends the second information to the producer entity, and correspondingly, the producer entity receives the second information from the first network element.

When the third information indicates the preference of the consumer entity for the solution, the third information and the first information may be in a same form or in different forms. For example, when the producer entity forwards the first information to the first network element, the third information may be in the same form as the first information. For another example, the producer entity may convert the first information into the third information that can be recognized and used by the first network element. The third information may indicate the first network element to perform a querying or simulation operation that satisfies the preference of the consumer entity for the solution.

When the third information indicates the solution type corresponding to the preference, the producer entity further determines, based on the first information, the solution type corresponding to the preference. The solution type corresponding to the preference may indicate an operation that needs to be performed by the first network element, for example, detecting a feasible object of the intent or detecting feasible time of the intent.

A manner in which the producer entity sends the third information to the first network element and a manner in which the first network element sends the second information to the producer entity are not limited in embodiments of this application. The third information and the second information may be carried in any message exchanged between the producer entity and the first network element. For example, when the first network element performs feasibility check on the first intent, the producer entity may send a first message to the first network element, where the first message is used to request to perform feasibility check on the first intent, and the first message includes the third information; and the first network element may send a second message to the producer entity, where the second message indicates a result of the feasibility check, and the second message includes the second information. In a manner, when the result of the feasibility check on the first intent indicates infeasibility, the first network element sends the second message to the producer entity.

It should be noted that the one or more recommended solutions may also be described as one or more recommended intent expressions. For a relationship between the intent expression and the solution, refer to the descriptions in step 301.

A manner in which the producer entity sends the second information to the consumer entity is not limited in embodiments of this application. The second information may be carried in any message exchanged between the producer entity and the consumer entity. In a possible implementation, the producer entity sends an intent report to the consumer entity. The intent report includes the second information. The intent report includes at least one of the following reports: an intent satisfaction report, an intent conflict report, or an intent feasibility check report. For descriptions of the intent report, the intent satisfaction report, the intent conflict report, or the intent feasibility check report, refer to the term explanation part. For example, for a case in which the producer entity determines, based on the result of the feasibility check, that the target of the first intent cannot be fulfilled, the producer entity may send an intent feasibility check report to the consumer entity. The intent feasibility check report indicates the result of the feasibility check, and the intent feasibility check report includes the second information. For example, for a case in which the producer entity determines, based on an achievement value of the target of the first intent, that the target of the first intent cannot be fulfilled, the producer entity may send an intent satisfaction report to the consumer entity. The intent satisfaction report includes the second information. For example, when the producer entity determines that the first intent has a conflict (for example, the first intent conflicts with another intent, or a conflict exists in the first intent), the producer entity may send an intent conflict report to the consumer entity. The intent conflict report includes the second information.

Step 303: The consumer entity manages the first intent based on the second information.

In this embodiment of this application, that the consumer entity manages the first intent based on the second information may mean that the consumer entity determines to accept or reject the one or more recommended solutions indicated by the second information, and indicates the one or more recommended solutions to the producer entity. In addition, when the consumer entity accepts or rejects one of the one or more recommended solutions indicated by the second information, the consumer entity, the producer entity, and the optional first network element and managed entity execute the solution accepted by the consumer entity, for example, execute an updated intent. That the consumer entity manages the first intent based on the second information may alternatively mean that the consumer entity requests, based on the second information, the producer entity to create a new intent or requests the producer entity to modify the first intent, and subsequently the consumer entity, the producer entity, and the optional first network element and managed entity may execute the new intent or a modified first intent.

In the method 300, the consumer entity may indicate a preference for a solution to the producer entity. In this case, when the target of the intent cannot be fulfilled, the producer entity may generate a solution that satisfies the preference, and does not need to generate a solution that does not satisfy the preference. In this way, the method 300 helps prevent the producer entity from generating a solution that the consumer entity does not consider at all, to reduce a waste of computing power resources and reduce a burden on the consumer entity.

The following describes the method 300 in detail by using an example in which the intent creation request message carries the first information and the producer entity obtains the second information from the network twin producer entity in a feasibility check process.

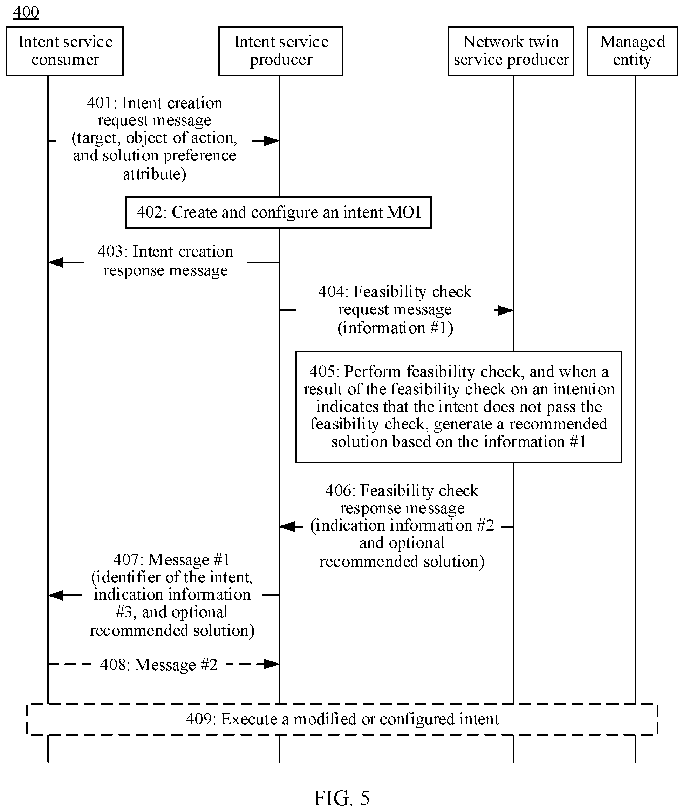

FIG. 5 is a schematic flowchart of a network management intent management method 400 according to this application. An intent service consumer, an intent service producer, a network twin service producer, a solution preference attribute, an intent creation request message, a feasibility check request message, a feasibility check response message, a message #1, and information #1 in the method 400 respectively correspond to the consumer entity, the producer entity, the network twin producer entity, the first information, the third message, the first message, the second message, the intent feasibility check report, and the third information above.

Step 401: The intent service consumer sends the intent creation request message to the intent service producer, and correspondingly, the intent service producer receives the intent creation request message from the intent service consumer.

The intent creation request message is used to request to create an intent. The intent creation request message includes a target of the intent, an object of action of the intent, and a solution preference attribute.

The solution preference attribute (solutionPreference) is used to describe a preference of the intent service consumer for a solution recommended by the intent service producer. The intent service consumer may use the attribute to restrict the intent service producer from generating some solutions, so as to assist the intent service producer in optimizing the recommended solution.

An optional value of the solution preference attribute may be [target (target), object of action (object)]. Specific meanings are as follows:
(1) The value of the solution preference attribute is the object of action, indicating that a solution that can satisfy the object of action is recommended when the intent cannot be fulfilled, in other words, a solution in which the object of action is not changed is recommended. The value of the solution preference attribute may be a default value. When the value of the solution preference attribute is the object of action, an object of action of a new intent obtained through the recommendation accepted by the intent service consumer is the same as that of an original intent.
(2) The value of the solution preference attribute is the target, indicating that a solution that can satisfy the target is recommended when the intent cannot be fulfilled, in other words, a solution in which the target is not changed is recommended. When the value of the solution preference attribute is the target, a target of a new intent obtained through the recommendation accepted by the intent service consumer is the same as that of an original intent.

For specific meanings of the optional value of the solution preference attribute, refer to step 301. Details are not described again.

It should be noted that the solution preference attribute may also have another name, for example, a recommendation solution preference attribute (recommendation preference), provided that a function of the solution preference attribute is to describe a preference of the intent service consumer for a solution recommended by the intent service producer. It should be further noted that the solution preference attribute may be for a whole intent, or may be for an intent expectation or an expectation target of the intent. This is not limited. For details, refer to the descriptions of the first attribute part.

For example, the intent service consumer may be an information technology (information technology, IT) system developed by a customer, and the intent service producer may be a device network management system of a vendor, for example, a mobile broadband automation engine (mobile broadband automation engine, MAE).

There are a plurality of manners in which the intent creation request message carries the solution preference attribute. This is not limited. For a specific implementation, refer to the sending manner of the first information.

Step 402: The intent service producer creates and configures a managed object instance (managed object instance, MOI) of the intent based on the intent creation request message.

Step 403: The intent service producer sends an intent creation response message to the intent service consumer, and correspondingly, the intent service consumer receives the intent creation response message from the intent service producer.

The intent creation response message includes an identifier of the intent and indication information #1. The indication information #1 indicates whether the intent is successfully created, and indication information in the method 400 indicates that the intent is successfully created.

Step 404: The intent service producer sends the feasibility check (feasibility check) request message to the network twin service producer, and correspondingly, the network twin service producer receives the feasibility check request message from the intent service producer, to perform feasibility check on the intent.

In addition to requesting to perform feasibility check on the intent, the feasibility check request message may further include the information #1. The information #1 indicates, to the network twin service producer, a preference of the intent service consumer for a solution. The feasibility check may include: checking satisfaction of intent fulfillment (the satisfaction of intent fulfilment), or whether a potential conflict (potential conflicts between one or more intent instances) exists. The potential conflict includes at least one of a conflict between different intents, a conflict between different intent expectations of a same intent, or a conflict between different expectation targets of a same intent.

For example, the information #1 includes a recommended solution type. The recommended solution type is used to describe a type of a recommended solution that can be generated, and may indicate, to the network twin service producer, an operation that needs to be performed, for example, detecting a feasible object of the intent, and detecting feasible time of the intent. The recommended solution type may be determined by the intent service producer based on the solution preference attribute from the intent service consumer.

For example, the information #1 may also include the solution preference attribute received in step 401.

Step 405: The network twin service producer performs feasibility check on the intent.

When a result of the feasibility check on the intent indicates that the intent does not pass the feasibility check (or that the intent is infeasible), the network twin service producer may generate a recommended solution based on the information #1.

Step 406: The network twin service producer sends the feasibility check response message to the intent service producer, and correspondingly, the intent service producer receives the feasibility check response message from the network twin service producer.

The feasibility check response message includes indication information #2 and an optional recommended solution, and the indication information #2 indicates a result of the feasibility check on the intent. When the check result of the feasibility check on the intent indicates that the intent passes the feasibility check (or that the intent is feasible), the feasibility check response message may not include the recommended solution. When the check result of the feasibility check on the intent indicates that the intent does not pass the feasibility check (or that the intent is infeasible), the feasibility check response message includes the recommended solution. In addition, when the indication information #2 indicates that the result of the feasibility check on the intent indicates that the intent does not pass the feasibility check (or that the intent is infeasible), the feasibility check response message may further include a failure cause.

Step 407: The intent service producer sends the message #1 to the intent service consumer, and correspondingly, the intent service consumer receives the message #1 from the intent service producer.

The message #1 is a feedback message of the intent feasibility check, may carry an intent feasibility check report, and may include the identifier of the intent, indication information #3, and an optional recommended solution. When the check result of the feasibility check on the intent indicates that the intent passes the feasibility check (or that the intent is feasible), the message #1 may not include the recommended solution. When the check result of the feasibility check on the intent indicates that the intent does not pass the feasibility check (or that the intent is infeasible), the message #1 includes the recommended solution. When the indication information #3 indicates that the result of the feasibility check on the intent indicates that the intent does not pass the feasibility check (or that the intent is infeasible), the message #1 further includes a failure cause.

It should be noted that a sequence of step 403 and a feasibility check process (for example, step 404, step 405, and step 406) is not limited in embodiments of this application. When step 403 is performed after the feasibility check process, the intent creation response message and the message #1 may be a same message (in other words, step 403 and step 407 are a same step), or the intent creation response message and the message #1 may be different messages. This is not limited.

Optionally, in step 408, the intent service consumer sends a message #2 to the intent service producer, and correspondingly, the intent service producer receives the message #2 from the intent service consumer.

The message #2 indicates that the intent service consumer accepts or rejects the recommended solution.

Optionally, in step 409, when the intent service consumer accepts the recommended solution, the intent service consumer, the intent service producer, the network twin service producer, and a managed entity execute an updated intent.

Specifically, the intent service producer may update the intent based on the message #2, generate a network deployment based on the updated intent, and configure and deploy the managed entity based on the generated network deployment. Then, the intent service consumer, the intent service producer, the network twin service producer, and the managed entity execute the updated intent.

After step 407, the intent service consumer may indicate to the intent service producer, as shown in step 408 and step 409, that the intent service consumer accepts or rejects the recommended solution, or may deliver a new intent or a modified intent to the intent service producer based on the recommended solution.

In the method 400, the solution preference attribute may be added to an intent model. The intent service consumer may restrict, by using the attribute, the intent service producer from generating some solutions, to assist the intent service producer in optimizing the recommended solution. This helps prevent the intent service producer from consuming computing power resources in generation of a useless solution, and reduces a burden of selection on the intent service consumer.

The following describes the method 300 in detail by using an example in which the intent creation request message carries the first information, the producer entity obtains the second information from the network twin producer entity, and the second information is fed back in the producer entity intent report.

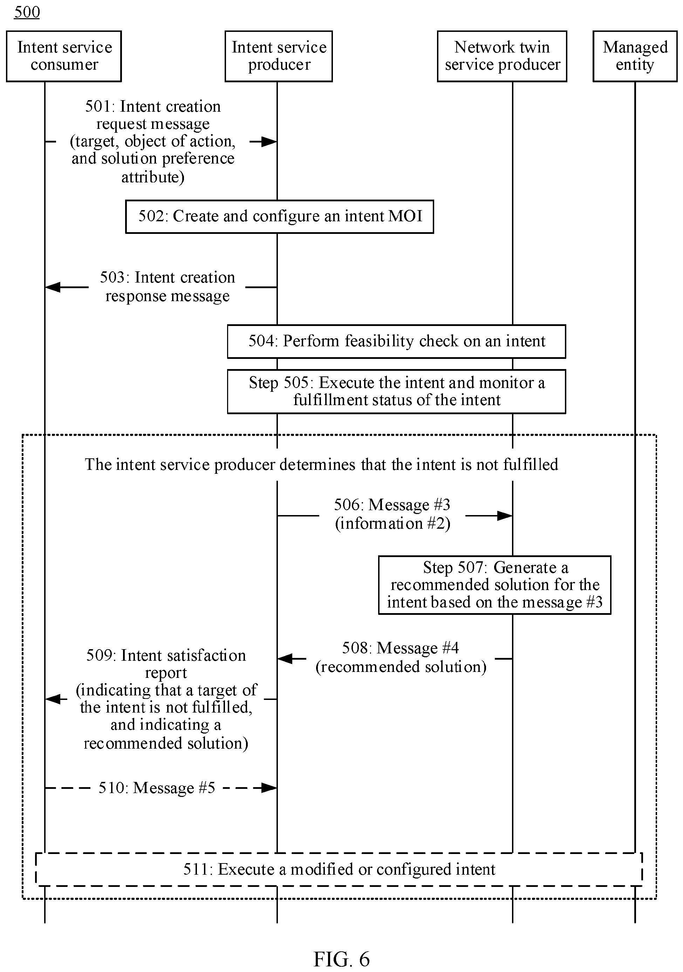

FIG. 6 is a schematic flowchart of a network management intent management method 500 according to this application. An intent service consumer, an intent service producer, a network twin service producer, a solution preference attribute, an intent creation request message, a message #3, a message #4, and information #2 in the method 500 respectively correspond to the consumer entity, the producer entity, the network twin producer entity, the first information, the third message, the first message, the second message, and the third information above.

Step 501: The intent service consumer sends the intent creation request message to the intent service producer, and correspondingly, the intent service producer receives the intent creation request message from the intent service consumer.

The intent creation request message is used to request to create an intent. The intent creation request message includes a target of the intent, an object of action of the intent, and a solution preference attribute.

Step 502: The intent service producer creates and configures an intent MOI based on the intent creation request message.

Step 503: The intent service producer sends an intent creation response message to the intent service consumer, and correspondingly, the intent service consumer receives the intent creation response message from the intent service producer.

The intent creation response message includes an identifier of the intent and indication information #1. The indication information #1 indicates whether the intent is successfully created, and indication information in the method 500 indicates that the intent is successfully created.

For step 501 to step 503, refer to step 401 to step 403. Details are not described again.

Step 504: The intent service producer performs feasibility check on the intent.

In the method 500, a result of the feasibility check on the intent indicates that the intent passes the feasibility check.

It should be noted that a sequence of step 503 and step 504 is not limited in embodiments of this application. As shown in FIG. 6, step 503 may be performed before step 504, or may be performed after step 504. This is not limited.

Step 505: The intent service producer executes the intent and monitors a fulfillment status of the intent.

Step 506: When the intent service producer determines that the intent is not fulfilled, the intent service producer sends the message #3 to the network twin service producer, and correspondingly, the network twin service producer receives the message #3 from the intent service producer.

The message #3 is used to obtain a recommended solution.

The message #3 may include the information #2. The information #2 indicates, to the network twin service producer, a preference of the intent service consumer for a solution. For example, the information #2 may include a recommended solution type. The recommended solution type is used to describe a type of a recommended solution that can be generated, and may indicate, to the network twin service producer, an operation that needs to be performed, for example, detecting a feasible object of the intent, and detecting feasible time of the intent. The recommended solution type may be determined by the intent service producer based on the solution preference attribute from the intent service consumer. For example, the information #2 may also include the solution preference attribute received in step 501.

Step 507: The network twin service producer generates a recommended solution for the intent based on the message #3.

Step 508: The network twin service producer sends the message #4 to the intent service producer, and correspondingly, the intent service producer receives the message #4 from the network twin service producer.

The message #4 is used to obtain a recommended solution.

Step 509: The intent service producer sends an intent satisfaction report to the intent service consumer, and correspondingly, the intent service consumer receives the intent satisfaction report from the intent service producer.

The intent satisfaction report indicates that the target of the intent is not fulfilled, and indicates the recommended solution. For example, the intent satisfaction report includes the identifier of the intent, fulfillment information, a reason for non-fulfillment, and the recommended solution. The fulfillment information indicates that the intent is not fulfilled.

Optionally, in step 510, the intent service consumer sends a message #5 to the intent service producer, and correspondingly, the intent service producer receives the message #5 from the intent service consumer.

The message #5 indicates that the intent service consumer accepts or rejects the recommended solution. When the intent service consumer accepts the recommended solution, the message #5 may include an intent obtained based on the recommended solution, and the intent service producer may modify or configure the intent based on the message #5.

Optionally, in step 511, when the intent service consumer accepts the recommended solution, the intent service consumer, the intent service producer, the network twin service producer, and a managed entity execute an updated intent.

Specifically, the intent service producer may update the intent based on the message #5, generate a network deployment based on the updated intent, and configure and deploy the managed entity based on the generated network deployment. Then, the intent service consumer, the intent service producer, the network twin service producer, and the managed entity execute the updated intent.

After step 509, the intent service consumer may indicate to the intent service producer, as shown in step 510 and step 511, that the intent service consumer accepts or rejects the recommended solution, or may deliver a new intent or a modified intent to the intent service producer based on the recommended solution.

In the method 500, the solution preference attribute may be added to an intent model. The intent service consumer may restrict, by using the attribute, the intent service producer from generating some solutions, to assist the intent service producer in optimizing the recommended solution. This helps prevent the intent service producer from consuming computing power resources in generation of a useless solution, and reduces a burden of selection on the intent service consumer.

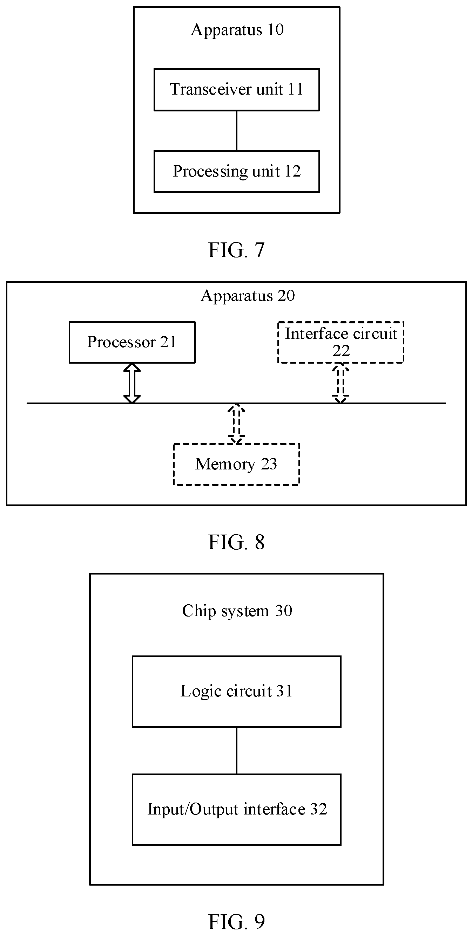

The foregoing describes in detail the method embodiments provided in this application with reference to FIG. 1 to FIG. 6. The following describes apparatus embodiments of this application with reference to FIG. 7 to FIG. 9.

It may be understood that, to implement functions in the foregoing embodiments, apparatuses in FIG. 7 to FIG. 9 include corresponding hardware structures and/or software modules for performing each function. A person skilled in the art should be easily aware that, in this application, the units and method steps in the examples described with reference to embodiments disclosed in this application can be implemented by hardware or a combination of hardware and computer software.

FIG. 7 and FIG. 8 are diagrams of structures of possible apparatuses according to embodiments of this application. These apparatuses may be configured to implement functions of the producer entity, the consumer entity, or the first network element in the foregoing method embodiments, and therefore can also achieve beneficial effects of the foregoing method embodiments.

As shown in FIG. 7, an apparatus 10 includes a transceiver unit 11 and a processing unit 12.

When the apparatus 10 is configured to implement a function of the producer entity in the foregoing method embodiments, the transceiver unit 11 is configured to perform sending and receiving steps of the producer entity, for example, step 301, step 302, step 401, step 403, step 404, step 406, step 407, step 408, step 501, step 503, step 506, step 508, step 509, or step 510, and the processing unit 12 is configured to perform processing steps of the producer entity, for example, step 402, step 409, step 502, step 504, step 505, or step 511. When the apparatus 10 is configured to implement a function of the consumer entity in the foregoing method embodiments, the transceiver unit 11 is configured to perform sending and receiving steps of the consumer entity, for example, step 301, step 302, step 401, step 403, step 407, step 408, step 501, step 503, step 509, or step 510, and the processing unit 12 is configured to perform processing steps of the consumer entity, for example, step 303, step 409, or step 511. When the apparatus 10 is configured to implement a function of the first network element in the foregoing method embodiments, the transceiver unit 11 is configured to perform sending and receiving steps of the first network element, for example, step 404, step 406, step 506, or step 508, and the processing unit 12 is configured to perform processing steps of the first network element, for example, step 405, step 409, step 504, step 505, step 507, or step 511.

For more detailed descriptions of the transceiver unit 11 and the processing unit 12, refer to related descriptions in the foregoing method embodiments. Details are not described herein.

As shown in FIG. 8, an apparatus 20 includes a processor 21. The processor 21 is coupled to a memory 23. The memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used in a producer entity, a consumer entity, or a first network element, the chip implements a function of the producer entity, the consumer entity, or the first network element in the foregoing method embodiments. The chip receives information from another module (like a radio frequency module or an antenna) in the producer entity, the consumer entity, or the first network element, where the information is sent by another apparatus to the producer entity, the consumer entity, or the first network element. Alternatively, the chip sends information to another module (like a radio frequency module or an antenna) in the producer entity, the consumer entity, or the first network element, where the information is sent by the producer entity, the consumer entity, or the first network element to another apparatus.

FIG. 9 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the producer entity, the consumer entity, or the first network element in the foregoing method embodiments.

For example, the logic circuit 31 is configured to implement processing-related operations performed by the producer entity, the consumer entity, or the first network element in the foregoing method embodiments; and the input/output interface 32 is configured to implement sending and/or receiving-related operations performed by the producer entity, the consumer entity, or the first network element in the foregoing method embodiments.

This application further provides a communication apparatus, including a processor. The processor is coupled to a memory. The memory is configured to store a computer program or instructions and/or data. The processor is configured to execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions, and the processor is configured to execute the computer program or the instructions stored in the memory, to implement the method performed by the producer entity, the consumer entity, or the first network element in the foregoing method embodiments.

This application further provides a computer-readable storage medium. The computer-readable storage medium stores computer instructions used to implement the method performed by the producer entity, the consumer entity, or the first network element in the foregoing method embodiments.

This application further provides a computer program product, including instructions. When the instructions are executed by a computer, the method performed by the producer entity, the consumer entity, or the first network element in the foregoing method embodiments is implemented.

This application further provides a communication system. The communication system includes at least one of the producer entity, the consumer entity, or the first network element in the foregoing embodiments.

For explanations and beneficial effects of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a portable hard drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a producer entity, a consumer entity, or a first network element. Certainly, the processor and the storage medium may also exist in the producer entity, the consumer entity, or the first network element as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Unless otherwise stated, meanings of all technical and scientific terms used in embodiments of this application are the same as those usually understood by a person skilled in the art of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. A network management intent management method, wherein the method comprises:
receiving first information from a consumer entity, wherein the first information indicates a preference of the consumer entity for a solution, and the preference corresponds to a first network management intent; and
when a target of the first network management intent cannot be fulfilled, sending second information to the consumer entity, wherein the second information indicates one or more recommended solutions, and the one or more recommended solutions satisfy the preference.

2. The method according to claim 1, wherein
the first information comprises a first attribute of the first network management intent, wherein
the first attribute is an attribute that the consumer entity does not expect to change, and the first attribute is not changed in the one or more recommended solutions; or
the first attribute is a changeable attribute, and an attribute other than the first attribute is not changed in the one or more recommended solutions.

3. The method according to claim 2, wherein
the first attribute comprises a target and/or an object of action.

4. The method according to claim 3, wherein
the first attribute further comprises a context.

5. The method according to any one of claims 1 to 4, wherein the method further comprises:
determining that the target of the first network management intent cannot be fulfilled.

6. The method according to claim 5, wherein determining that the target of the first network management intent cannot be fulfilled comprises:
after executing an action group for the first network management intent, determining that the target of the first network management intent is not fulfilled, wherein the action group comprises one or more actions used to manage a managed entity of the first network management intent.

7. The method according to claim 5, wherein determining that the target of the first network management intent cannot be fulfilled comprises:
performing feasibility check on the first network management intent; and
when a result of the feasibility check indicates infeasibility, determining that the target of the first network management intent cannot be fulfilled.

8. The method according to any one of claims 1 to 7, wherein sending the second information to the consumer entity comprises:
sending an intent report to the consumer entity, wherein the intent report comprises the second information.

9. The method according to claim 8, wherein the intent report comprises at least one of the following reports: an intent satisfaction report, an intent conflict report, or an intent feasibility check report.

10. The method according to any one of claims 1 to 9, wherein the method further comprises:
sending third information to a first network element based on the first information, wherein the third information indicates the preference or a solution type corresponding to the preference, and the first network element comprises a network twin producer entity or a knowledge base; and
receiving the second information from the first network element.

11. The method according to claim 10, wherein
sending the third information to the first network element comprises: sending a first message to the first network element, wherein the first message is used to request to perform feasibility check on the first network management intent, and the first message comprises the third information; and
receiving the second information from the first network element comprises: receiving a second message from the first network element, wherein the second message indicates the result of the feasibility check, and the second message comprises the second information.

12. The method according to any one of claims 1 to 11, wherein receiving the first information from the consumer entity comprises:
receiving a third message from the consumer entity, wherein the third message is used to request to create the first network management intent, wherein
the third message comprises the first network management intent, and the first network management intent comprises the first information, or the third message comprises the first network management intent and the first information.

13. A network management intent management method, wherein the method comprises:
sending first information to a producer entity, wherein the first information indicates a preference of a consumer entity for a solution, and the preference corresponds to a first network management intent;
receiving second information from the producer entity, wherein the second information indicates one or more recommended solutions, and the one or more recommended solutions satisfy the preference; and
managing the first network management intent based on the second information.

14. The method according to claim 13, wherein
the first information comprises a first attribute of the first network management intent, wherein
the first attribute is an attribute that the consumer entity does not expect to change, and the first attribute is not changed in the one or more recommended solutions; or
the first attribute is a changeable attribute, and an attribute other than the first attribute is not changed in the one or more recommended solutions.

15. The method according to claim 14, wherein
the first attribute comprises a target or an object of action.

16. The method according to claim 15, wherein
the first attribute further comprises a context.

17. The method according to any one of claims 13 to 16, wherein receiving the second information from the producer entity comprises:
receiving an intent report from the producer entity, wherein the intent report comprises the second information.

18. The method according to claim 17, wherein the intent report comprises at least one of the following reports: an intent satisfaction report, an intent conflict report, or an intent feasibility check report.

19. The method according to any one of claims 13 to 18, wherein sending the first information to the producer entity comprises:
sending a third message to the producer entity, wherein the third message is used to request to create the first network management intent, wherein
the third message comprises the first network management intent, and the first network management intent comprises the first information, or the third message comprises the first network management intent and the first information.

20. A network management intent management method, wherein the method comprises:
receiving third information from a producer entity, wherein the third information indicates a preference of a consumer entity for a solution or a solution type corresponding to the preference, and the preference or the solution type corresponds to a first network management intent;
determining second information based on the third information, wherein the second information indicates one or more recommended solutions, and the one or more recommended solutions satisfy the preference; and
sending the second information to the producer entity.

21. The method according to claim 20, wherein
receiving the third information from the producer entity comprises: receiving a first message from the producer entity, wherein the first message is used to request to perform feasibility check on the first network management intent, and the first message comprises the third information; and
sending the second information to the producer entity comprises: sending a second message to the producer entity, wherein the second message indicates a result of the feasibility check, and the second message comprises the second information.

22. A network management intent management method, wherein the method comprises:
sending, by a consumer entity, first information, and receiving, by a producer entity, the first information, wherein the first information indicates a preference of the consumer entity for a solution, and the preference corresponds to a first network management intent;
when a target of the first network management intent cannot be fulfilled, sending, by the producer entity, second information, and receiving, by the consumer entity, the second information, wherein the second information indicates one or more recommended solutions, and the one or more recommended solutions satisfy the preference; and
managing, by the consumer entity, the first network management intent based on the second information.

23. A network management intent management apparatus, wherein the apparatus comprises a transceiver unit and a processing unit, wherein
the transceiver unit is configured to receive first information from a consumer entity, wherein the first information indicates a preference of the consumer entity for a solution, and the preference corresponds to a first network management intent; and
the processing unit is configured to: when a target of the first network management intent cannot be fulfilled, send second information to the consumer entity, wherein the second information indicates one or more recommended solutions, and the one or more recommended solutions satisfy the preference.

24. A network management intent management apparatus, wherein the apparatus comprises a transceiver unit and a processing unit, wherein
the transceiver unit is configured to send first information to a producer entity, wherein the first information indicates a preference of the management apparatus for a solution, and the preference corresponds to a first network management intent;
the transceiver unit is further configured to receive second information from the producer entity, wherein the second information indicates one or more recommended solutions, and the one or more recommended solutions satisfy the preference; and
the processing unit is configured to manage the first network management intent based on the second information.

25. A network management intent management apparatus, wherein the apparatus comprises a transceiver unit and a processing unit, wherein
the transceiver unit is configured to receive third information from a producer entity, wherein the third information indicates a preference of a consumer entity for a solution or a solution type corresponding to the preference, and the preference or the solution type corresponds to a first network management intent;
the processing unit is configured to determine second information based on the third information, wherein the second information indicates one or more recommended solutions, and the one or more recommended solutions satisfy the preference; and
the transceiver unit is further configured to send the second information to the producer entity.

26. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 22 by using a logic circuit or by executing code instructions.

27. The communication apparatus according to claim 26, wherein the communication apparatus is a chip or a chip system.

28. A computer-readable storage medium, wherein the storage medium stores a computer program or instructions, and when the computer program or the instructions are executed by a communication apparatus, the method according to any one of claims 1 to 22 is implemented.

29. A communication system, comprising a communication apparatus configured to perform the method according to any one of claims 1 to 12 and a communication apparatus configured to perform the method according to any one of claims 13 to 19.

30. A computer program product, comprising instructions, wherein when the instructions are executed by a computer, the method according to any one of claims 1 to 22 is implemented.
